# EUROPEAN PATENT APPLICATION

(11) **EP 1 312 838 A2**
(43) Date of publication of application: **21.05.2003**
(21) Application number: 02005950.7
(22) Date of filing: 15.03.2002
(51) Int. Cl.: F16H 61/36

(54) **Transmission gear shift cable for vehicle automatic transmission**

(30) Priority: 15.11.2001 KR 2001071001
(71) Applicant: Kia Motors Co., Ltd., Kwang Myung-shi, Gyeonggi-do (KR)
(72) Inventor: Tchoi, Seung-Woo, Gunpo-si, Gyeonggi-do (KR)
(74) Representative: Dr. Weitzel & Partner

(57) **Abstract**

The present invention relates to a transmission gear shift cable for an automatic transmission vehicle that can prevent vibration and noises from the transmission from being transferred to a shift lever (1) and the interior of a vehicle. The shift cable (4) consists of wire (20) that is connected to a shift lever's pivot lever (3) at one end of the wire, and to an actuating lever at the other end, and a cable body that has a cover encircling the wire to some extent so that the wire can move freely. A fixed member (30) attaches the cable body to a mounting bracket that mounts the shift lever to the vehicle body. The fixed member (30) has a fixed piece (36) that has a perforation hole (36a) to which fastening devices are inserted. A bushing (38) is inserted into the perforation hole for vibration insulation. A connecting device (46) fixes the cable to a fixed bracket that is installed outside the transmission. The connecting device (46) consists of a connecting piece (48) to which the cable body's end (24) is inserted and fixed, a casing cap (52) that is fixed to the connecting piece's end, a connecting tube (54) that is fixed to the casing cap and the transmission's bracket, a connecting rod (62) that is inserted into the connecting tube that the cable body's wire is inserted into, and an insulation member (68) that is installed to prevent driving noises and vibrations from being transferred to the shift lever.

## Description

### Background of the Invention

### 1. Technical field

The present invention relates to a transmission gearshift cable for an automatic transmission vehicle. More particularly, the present invention relates to a transmission gear shift cable for an automatic transmission vehicle that can prevent vibrations and noises from the transmission from being transferred to the shift lever and the inside of the vehicle.

### 2. Description of Prior Art

In general, a vehicle is equipped with an engine for operation of the vehicle. A transmission is connected to the engine to change the speed of the vehicle. The transmission is connected to a shift lever by a cable so that a driver can control the transmission from the driver's seat.

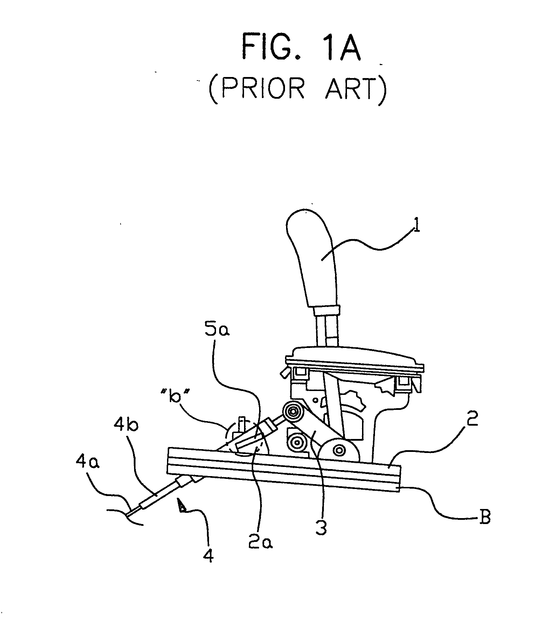

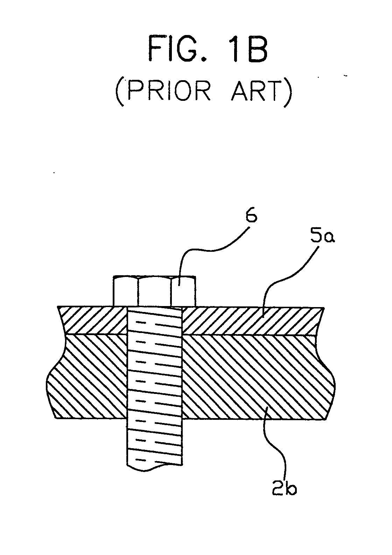

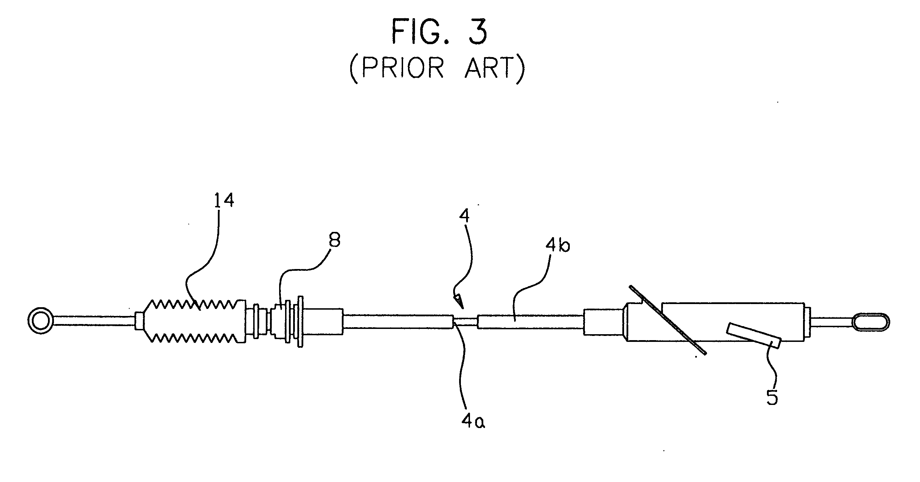

Namely, as illustrated in FIG. 1a, the shift lever 1 is installed to the body B by a mounting bracket 2. The shift lever is close to the driving seat so that a driver can maneuver it with hands. Also, a pivot lever 3 is connected to the bottom of the shift lever 1. The pivot lever 3 moves back and forth according to how a driver maneuvers the shift lever 1. Also in the body, a transmission (not shown) is installed that changes speed according to the operation of the shift lever 1. Meanwhile, when a driver maneuvers the shift lever, the operating force or operating condition should be conveyed to the transmission. To this end, a shift cable 4 connects the shift lever and the transmission to each other. Inside the cable are wires 4a and a cover 4b. The wires 4a are fixed to the pivot lever 3 at first gear and are connected to the transmission's actuating lever at other gears. The cover 4b is designed to protect the wires 4a as well as make the wires move back and forth easily. Also, a fixed member 5 with a fixed piece 5a is equipped at the cable's 4 shift lever side end to fix a side of the cable's 4 cover 4b to a supporting piece 2a of mounting bracket 2. Based on the structure, as illustrated in FIG. 3, fixed member's 5 fixed piece 5a that is installed to one side of the cable 4 is directly fixed to a supporting piece 2a of mounting bracket 2 by fastening devices such as bolts 6.

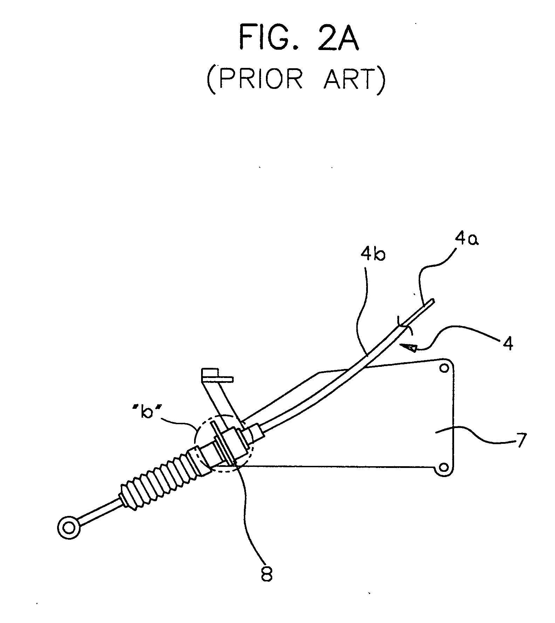

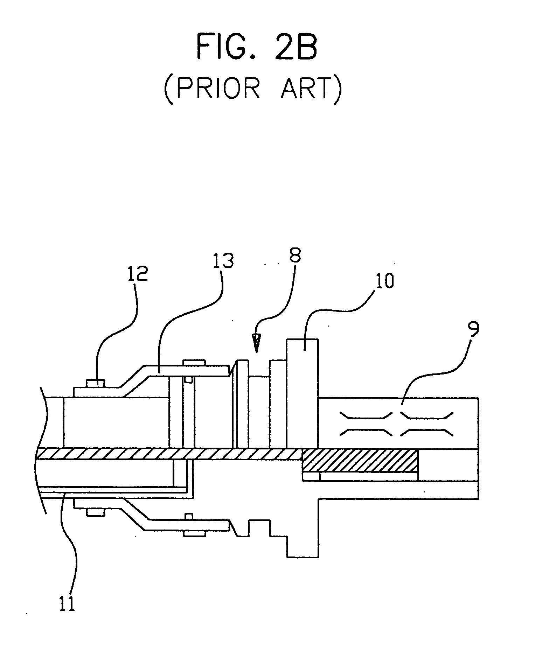

Referring to FIG. 2a, on the other side of cable 4, a connecting device 8 is installed to fix the cable 4 to a bracket 7 outside the transmission and connect a transmission's shift lever (not shown) to said cable 4. As illustrated in FIG. 2b, the connecting device 8 has a connecting piece 9 to which the other end of the cable's 4 cover 4b is inserted and fixed, a casing cap 10 that protects the wires 4a, enabling them to move freely, and fixing them to the bracket 7 outside the transmission, a protection tube 11 that protects wires' 4a ends through the casing cap 10, and a connecting tube 13 that fastens the protection tube 11 to the casing cap 10 with fastening devices such as rings 12. Bellows 14, illustrated in FIG. 3, are installed to the connecting device 8 to protect the ends of the cable.

Based on the connection mechanism between the shift lever and the transmission, the pivot lever pivots if a driver changes the shift lever position among P, R, N, D, etc. The pivoting pulls or restores the wires 4a of the cable 4, and subsequently operates the transmission lever that is connected to the wires and changes speed. Meanwhile, in case of four-wheel drive vehicles, though not exclusively, a TOD (torque on demand) is installed to the end of the transmission, automatically allocating and conveying the operating force from the transmission to front wheels and rear wheels.

However, in a conventional way of connecting a shift lever and a transmission with a shift cable, the following problems are likely to occur. First, each end of the cable is connected to a bracket at the shift lever and a bracket at the transmission respectively. As a result, driving noises from the TOD are conveyed directly to the shift lever through the cable and ultimately to the inside of the vehicle. Second, vibrations that occur from the TOD or the transmission are conveyed to the shift lever through the cable. The vibrations are then conveyed to the driver through the shift lever.

### Summary of the Invention

The present invention addresses the aforementioned problems. A purpose of the present invention is to provide a transmission gear shift cable for an automatic transmission vehicle that prevents noises from the transmission or the TOD from being transferred to the inside of the vehicle through the cable.

Another purpose of the invention is to provide a transmission gearshift cable for an automatic transmission vehicle that prevents vibration from the transmission or the TOD from being transferred to the shift lever though the cable.

The aforementioned purposes can be achieved by the present transmission gear shift cable for automatic transmission vehicle comprising: a cable body including a wire that is connected to the pivot lever of the shift lever at a end of the wire and to the actuating lever of the transmission at the other end, and a cover that encircles said wire so that said wire can move freely; a fixed member that is to fix said cable body to a mounting bracket to fix a shift lever to a vehicle body and has a fixed piece with a perforation hole to which a fastening device and a vibration insulation bushing are inserted; and a connecting device to fix said cable body to a fixed bracket outside the transmission including a connecting piece to which an end of the cable body is inserted and fixed, a casing cap that is fixed to an end of said connecting piece, a connecting tube that is fixed to said casing cap and a transmission's bracket, a connecting rod which is inserted into said connecting tube and said cable body's wire are inserted into, and an insulation member that is installed to prevent driving noises and vibration from the transmission from being transferred to a shift lever.

The above and other advantages of embodiments of this invention will be apparent from the following more detailed description when taken in conjunction with the accompanying drawings.

### Brief Description of the Drawings

FIG. 1a is a partial side view that shows how a general shift lever and a gearshift cable are connected.
FIG. 1b is an enlarged section of part b from the FIG. 1a.
FIG. 2a is a side view that shows how a general transmission's mounting bracket and a shift cable are connected.
FIG. 2b is an enlarged section of part b from the FIG. 2a.
FIG. 3 is a side view that shows an overall structure of a general transmission gearshift cable.
FIG. 4 a side view of an overall structure of the present transmission gear shift cable for automatic transmission vehicle.
FIG. 5 is a perspective view of a bushing applied to the shift cable in the FIG. 4.
FIG. 6 is an enlarged partial section of an applied bushing in the FIG. 5.
FIG. 7 is an enlarged partial perspective view of the cable's connecting device in the FIG. 4.
FIG. 8 is an enlarged partial section of the FIG. 7.
FIG. 9 is a graph that compares noise transfer of the present transmission gearshift cable and a traditional shift cable.

### Detailed Description of the Preferred Embodiment

In the following description, working examples will be explained in detail based on attached drawings.

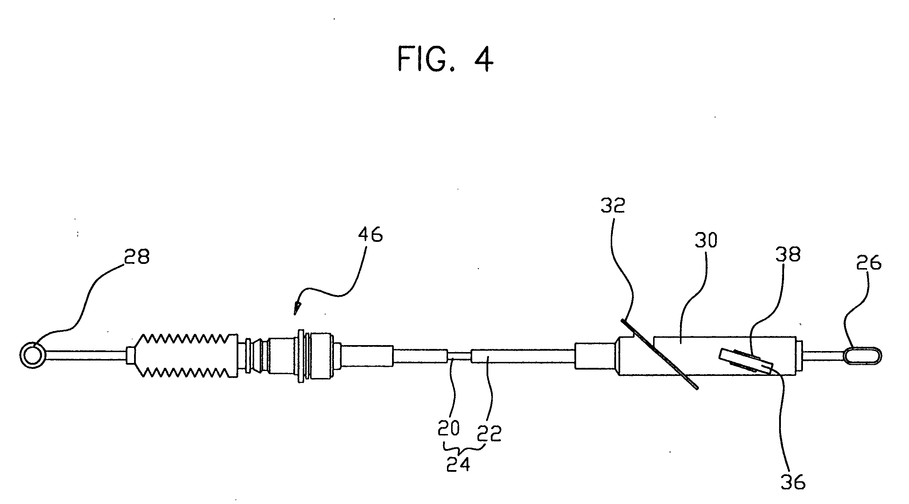

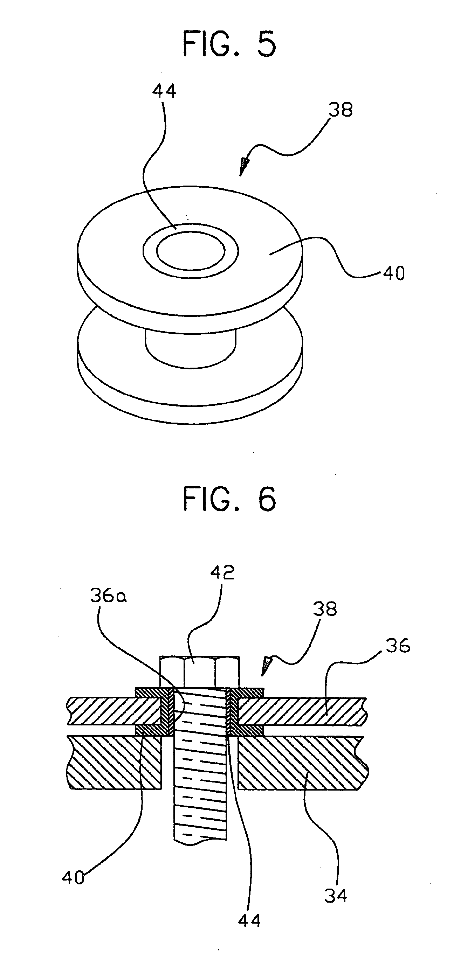

First, in FIG. 4, the present transmission gear shift cable for an automatic transmission vehicle comprises a wire 20 (that can be made of metal or other suitable material), and a cable body 24 that consists of a cover 22 encircling the wire 20 so that the wire 20 can move freely within a certain range. At one side of the cable body's 24 wire 20, or more particularly, at the shift lever side, a fixed end 26 is formed that is fixed to the actuating lever. At the other side of the wire 20, a connecting end 28 is formed that is fixed to the transmission's actuating lever (not shown). Further, at the cable's shift lever side is a fixed member 30 that is fixed to or buttressed by a mounting bracket that attaches the cable to the mounting bracket. At the fixed member 30, a supporting piece 32 attaches the cable to the mounting bracket. In addition, the fixed member 30 has a fixed piece 36 that is integrally formed and fixed to a mounting fixed piece 34 (refer to FIG. 6) of the mounting bracket. A perforation hole 36a is formed at the fixed piece 36.

In particular, a bushing 38 is inserted into the perforation hole 36a of the fixed piece 36. As illustrated in FIG. 5 and FIG. 6 in detail, the bushing 38 comprises the combination of a body 40 and a reinforcement member 44. The body 40 is made of elastic material such as rubber to stop the conveyance of vibration by preventing direct contacts between two metal parts, i.e. the fixed piece 36 and the mounting bracket's mounting fixed piece 34. The reinforcement member complements the body's stiffness and adjoins bolts 42 designed to fix the mounting fixed piece 34 to the fixed member 30.

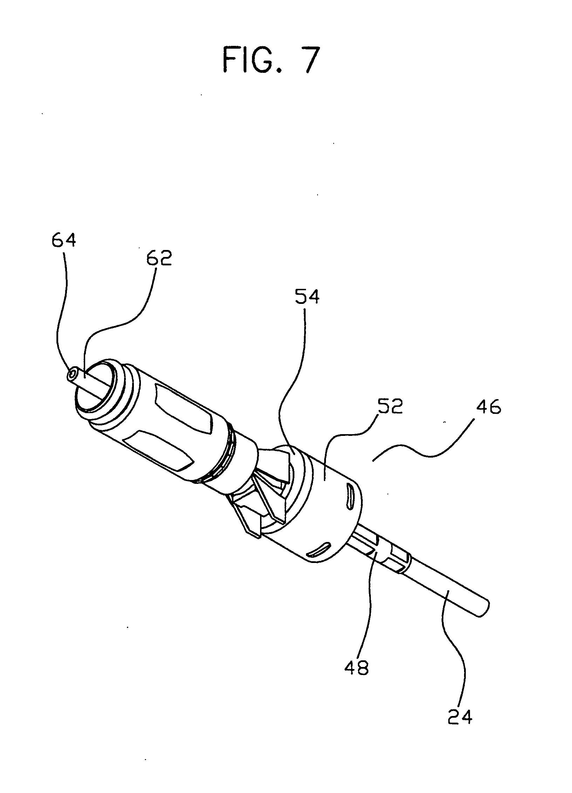

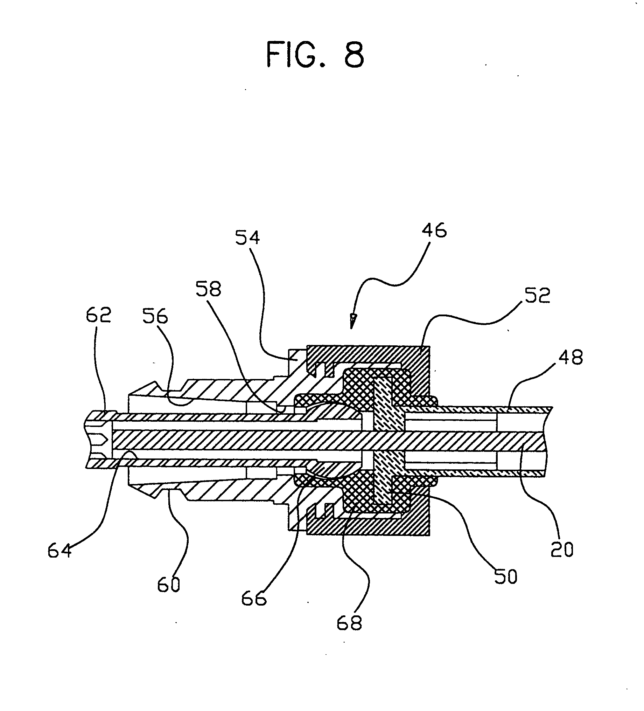

At the other side of the cable body, namely at the transmission side end, a connecting device 46 is provided to fix the cable to the fixed bracket that is installed outside the transmission. As illustrated in FIG. 7 and FIG. 8 in detail, the connecting device 46 has a connecting piece 48 to which some of the cable body's 24 section is inserted and fixed. The connecting piece 48 is made of metal for stable support, and its end is preferably formed integrally with a flange 50 for a stable union. At the end of the connecting piece 48 is a casing cap 52. The casing cap 52 is made of synthetic resin such as plastic and its shape is preferably a cylinder.

To the casing cap 52 is added a connecting tube 54 that is actually fixed to the transmission's bracket. An end of the connecting tube is preferably inserted into the casing cap 52 and integrally combined. In the central part of through hole 56, protruding borders 58 with a constant thickness are formed toward the center. The border 58 plays a role to prevent a connecting rod from being displaced. The connecting rod is described below. In particular, the through hole 56 of the connecting tube 54 is preferably formed in a way that its diameter increases toward the other end, namely toward the transmission, so that the connecting rod can move freely and deflect easily within a certain degree. On the outside of the connecting tube's 54 other end, a fixing groove 60 for the protection tube is created to protect the connecting rod from the exterior.

Connecting rod 62 is inserted into the connecting tube's 54 through hole 56. The connecting rod 62 has a vertical guide hole 64 to which the cable body's 24 wire 20 are inserted in a way that they can move back and forth freely. In particular, at the first gear part of the connecting rod is created a round inserting part. The inserting part is inserted into one side of the border in the connecting tube, namely in the right space in FIG. 8 in a way that it can rotate.

In particular, according to a characteristic of the present shift cable, an insulation member 68 is attached to the connecting device to prevent noises from TOD operation from being transferred to the shift lever through the cable's wire. The insulation member 68 is preferably made of elastic material such as rubber or synthetic resin. In addition, the insulation member 68 is placed between the connecting piece 48 (that the cable body's 24 wire pierces) and the connecting rod 62, and between the casing cap 52 and the connecting tube 54 to prevent direct contacts of the parts. As a result, for instance, vibration from the wire or the connecting rod is completely absorbed by the insulation member 68 and not transferred to the cable body.

Optionally, the insulation member 68 can take various shapes. Preferably, it is formed so that it can completely encircle the flange 50 of the connecting piece 48 and the connecting rod's 62 inserting part 66.

The following describes how the transmission shift cable with the aforementioned structure works and operates. For example, while a vehicle is running, noises originate from the transmission, particularly the TOD in the back of the transmission. Also, vibration is conveyed to the connecting rod 62 through the wire's 20 connecting end 28. However, the insulation member 68 through the round inserting part 66 in the connecting rod's section absorbs vibration transferred to the connecting rod 62. Namely, the connecting rod's 62 inserting part 66 is almost completely encircled by the insulation member 68, which absorbs vibration. As a result, vibration is not transferred to the connecting piece 48 because the insulation member 68 intervenes to prevent the connecting rod's inserting part 66 and the connecting piece 48 from contacting with each other directly. Accordingly, driving noises and vibration are not transferred to the cable body through the connecting piece to the shift lever, and ultimately to the inside of the vehicle, which reduces noise levels inside the vehicle.

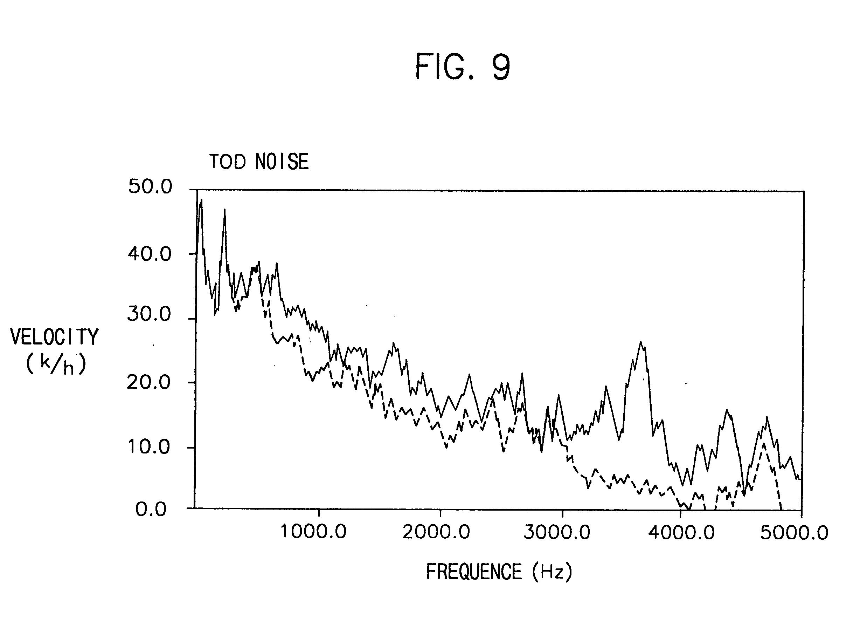

As illustrated in FIG. 9, driving noise from the present shift cable is less than driving noise from the conventional cable in the overall frequency area. According to the graph, in a 50 km-per-hour normal speed-driving test, noises decrease in the whole frequency area. In particular, in the 3KHz range, driving noises from TOD substantially decrease.

Optionally, a rubber-made bushing 38 can be inserted to the fixed piece's 34 perforation hole 36a in the cable body's 24 shift lever side section and be fixed to the fixed member 30 by bolts 42. As a result, even if driving noises and vibration are transferred to the cover 22 of the cable body 24, bushing 38, preventing the shift lever's vibration, absorbs them. Accordingly, noise can be reduced.

As a result, according to the present transmission gear shift, noise inside the vehicle is reduced because the connecting piece that the wire penetrates and the connecting rod do not adjoin each other directly but are separated by the insulation member made of elastic material in the casing cap and the connecting tube.

While the invention has been described with regards to specific embodiments and specifications, those skilled in the art will recognize that changes can be made in form and detail without departing from the spirit and scope of the invention.

## Claims

1. A transmission gearshift cable for an automatic transmission vehicle comprising:
a cable body including a wire that is connected to the pivot lever of the shift lever at a end of the wire and to the actuating lever of the transmission at the other end, and a cover that encircles said wire so that said wire can move freely;
a fixed member that is to fix said cable body to a mounting bracket to fix a shift lever to a vehicle body and has a fixed piece with a perforation hole to which a fastening device and a vibration insulation bushing are inserted; and
a connecting device to fix said cable body to a fixed bracket outside the transmission including a connecting piece to which an end of the cable body is inserted and fixed, a casing cap that is fixed to an end of said connecting piece, a connecting tube that is fixed to said casing cap and a transmission's bracket, a connecting rod which is inserted into said connecting tube and said cable body's wire are inserted into, and an insulation member that is installed to prevent driving noises and vibration from the transmission from being transferred to a shift lever.

2. The transmission gear shift cable for automatic transmission vehicle as claimed in claim 1, wherein said bushing contains integrally a rubber-made body to prevents said fixed member's fixed piece and the mounting bracket's supporting piece from contacting with each other directly and prevents vibration from being transferred, and a reinforcement member that complements said body's stiffness and adjoins bolts designed to fix said fixed piece to the mounting bracket.

3. The transmission gear shift cable for automatic transmission vehicle as claimed in claim 1, wherein in the center of the through hoe of the connecting tube where said connecting rod is inserted protruding borders with a constant thickness are formed toward the center, and said through hole's diameters increase gradually from said borders to the transmission so that said connecting rod can move freely within a certain range.

4. The transmission gear shift cable for automatic transmission vehicle as claimed in claim 3, wherein at one end of said connecting rod a round inserting part is formed integrally that is inserted into a shift lever side space formed by the borders in said connecting tube's through hole.

5. The transmission gear shift cable for automatic transmission vehicle as claimed in claim 1, wherein said insulation member is placed between a connecting piece that said body's wire goes through and a connecting rod, and said casing cap and a connecting tube.

6. The transmission gear shift cable for automatic transmission vehicle as claimed in claim 5, wherein said insulation member completely encircles an end of said connecting piece and said connecting rod's inserting part.
